Europäisches Patentamt

European Patent Office

Office européen des brevets

(19)

(11) Veröffentlichungsnummer: **0 310 933**
**A2**

(12) # EUROPÄISCHE PATENTANMELDUNG

(21) Anmeldenummer: **88116037.8**

(51) Int. Cl.⁴: **G01F 11/26**

(22) Anmeldetag: **29.09.88**

(30) Priorität: **09.10.87 DE 3734132**

(43) Veröffentlichungstag der Anmeldung:
**12.04.89 Patentblatt 89/15**

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Künzel, Werner, Dipl.-Ing.**
**Eichenfeldstrasse 65**
**D-4018 Langenfeld(DE)**
Erfinder: **Vierkötter, Peter, Dipl.-Ing.**
**Sperberweg 7**
**D-5090 Leverkusen 3(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) **Vorrichtung mit wenigstens einem Aufnahmebehälter zur Aufbewahrung und Abgabe eines Stoffes.**

(57) Mit einer Vorrichtung mit wenigstens einem Aufnahmebehälter zur Aufbewahrung und Abgabe eines Stoffes, wobei der Aufnahmebehälter mit einer Dosiereinrichtung ausgerüstet ist, soll eine Lösung geschaffen werden, die bei gleichzeitiger, getrennter Aufbewahrung von fließfähigen und schüttfähigen Stoffen eine mehrmalige Abgabe beider Stoffe in genau dosierter Zusammensetzung mit nur einem Schüttvorgang ohne zusätzliche Hilfsmittel ermöglicht.

Dies wird dadurch erreicht, daß der Aufnahmebehälter (4) mit Dosiereinrichtung für einen schüttfähigen Stoff (5) vorgesehen und wenigstens einem weiteren Aufnahmebehälter (2) für einen fließfähigen Stoff (3) zugeordnet ist, wobei der Aufnahmebehälter (4) mit Dosiereinrichtung als Einsatz in den Aufnahmebehälter (2) für den fließfähigen Stoff (3) integriert ist.

FIG. 2

EP 0 310 933 A2

## Vorrichtung mit wenigstens einem Aufnahmebehälter zur Aufbewahrung und Abgabe eines Stoffes

Die Erfindung betrifft eine Vorrichtung mit wenigstens einem Aufnahmebehälter zur Aufbewahrung und Abgabe eines Stoffes, wobei der Aufnahmebehälter mit einer Dosiereinrichtung ausgerüstet ist.

Bekannt ist eine Vorrichtung (US-PS 4 183 450) mit einem Aufnahmebehälter zur Aufbewahrung und Abgabe eines fließfähigen Stoffes und einer als Aufsatz auf den Aufnahmebehälter ausgebildeten Dosiereinrichtung zur dosierten Abgabe des fließfähigen Stoffes. Diese Vorrichtung ist aufgrund der Ausbildung ihrer Dosiereinrichtung jeweils nur für einen fließfähigen Stoff, nicht aber für mehrere fließfähige Stoffe oder für schüttfähige Stoffe geeignet.

Es gibt aber Produkte, die bei ihrem bestimmungsgemäßen Gebrauch aus wenigstens zwei Komponenten zusammengestellt werden müssen, wobei insbesondere die eine Komponente aus einem fließfähigen und die andere aus einem schüttfähigen Stoff gebildet ist (z. B. Flüssigwaschmittel, denen Bleichmittel in Pulverform zugefügt werden sollen).

Vorrichtungen zur Aufbewahrung und Abgabe derartiger Stoffe sind bekannt. Vor der Abgabe wird der Aufnahmebehälter für den schüttfähigen Stoff zerstört, so daß der schüttfähige Stoff in die Flüssigkeit entleerbar ist. Das dann gemischte Produkt wird dem Aufbewahrungsbehälter entnommen (z.B. G 83 36 653 oder G 82 14 974). Nachteilig bei diesen Vorrichtungen ist jedoch, daß sie nur zum einmaligen Gebrauch geeignet sind, da der schüttfähige Stoff sich vollständig in die Flüssigkeit entleert und das gesamte Produkt nach dem Mischvorgang sofort verbraucht werden muß.

Aufgabe der Erfindung ist deshalb die Schaffung einer Lösung, die bei gleichzeitiger, getrennter Aufbewahrung von fließfähigen und schüttfähigen Stoffen eine mehrmalige Abgabe beider Stoffe in dosierter Zusammensetzung mit nur einem Schüttvorgang ohne zusätzliche Hilfsmittel ermöglicht.

Mit einer Vorrichtung der eingangs bezeichneten Art wird diese Aufgabe gemäß der Erfindung dadurch gelöst, daß der Aufnahmebehälter mit Dosiereinrichtung für einen schüttfähigen Stoff vorgesehen und wenigstens einem weiteren Aufnahmebehälter für einen fließfähigen Stoff zugeordnet ist, wobei der Aufnahmebehälter mit Dosiereinrichtung als Einsatz in den Aufnahmebehälter für den fließfähigen Stoff integriert ist.

Mit der erfindungsgemäßen Vorrichtung wird einerseits eine gleichzeitige, getrennte Aufbewahrung wenigstens eines fließfähigen und eines schüttfähigen Stoffes und andererseits eine mehrfache Abgabe der Stoffe in genau dosierter Zusammensetzung ermöglicht, wobei die Vorrichtung leicht handhabbar ist, d. h. mit nur einem Schüttvorgang eine dosierte Abgabe ermöglicht, und durch die Möglichkeit einer Nachfüllung mehrfach gebraucht werden kann.

In Ausgestaltung der Erfindung ist vorgesehen, daß der Aufnahmebehälter mit Dosiereinrichtung aus zwei durch eine bereichsweise zu öffnende Trennwand voneinander getrennten Kammern besteht. Dabei dient die eine Kammer als Reservoir und die andere als Ausschüttkanal für den schüttfähigen Stoff.

In besonders vorteilhafter Ausgestaltung sieht die Erfindung vor, daß die eine den schüttfähigen Stoff aufnehmende Kammer eine in Richtung zur Trennwand hin nach unten abgeschrägte Bodenfläche aufweist und/oder die andere als Ausschüttkanal dienende Kammer einen Bereich aufweist, der sich bis unterhalb der Bodenfläche der Kammer für den schüttfähigen Stoff erstreckt. Bei geöffneter Trennwand rieselt eine bestimmte Menge des schüttfähigen Stoffs über die abgeschrägte Bodenfläche der einen Kammer in die andere Kammer.

Weiterhin ist vorgesehen, daß die als Ausschüttkanal dienende Kammer zylindrisch ausgebildet ist, wobei die Öffnung in der Trennwand durch ein in die zylindrische Kammer eingesetztes drehbares Rohr verschließbar ist, das im Bereich der Öffnung als Halbrohr ausgebildet ist. Je nach Stellung des Rohres wird die Öffnung freigegeben oder verschlossen.

Eine besonders vorteilhafte Ausgestaltung der Erfindung besteht darin, daß das Rohr am oberen Ende in einen Deckel integriert ist, wobei der Deckel mit je einer Ausschüttöffnung für den fließ- und für den schüttfähigen Stoff versehen ist. Dabei ist es besonders günstig, daß der Deckel von einer Schließstellung in eine Öffnungsstellung insbesondere für die Ausschüttöffnungen drehbar ist. Je nach Stellung des Deckels wird gleichzeitig die Öffnung zwischen den beiden Kammern des Aufnahmebehälters für den schüttfähigen Stoff und die Ausschüttöffnung des Rohres sowie die Ausschüttöffnung des Aufnahmebehälters für den fließfähigen Stoff freigegeben oder verschlossen.

Die Erfindung ist nachstehend anhand der Zeichnung beispielsweise näher erläutert. Diese zeigt in

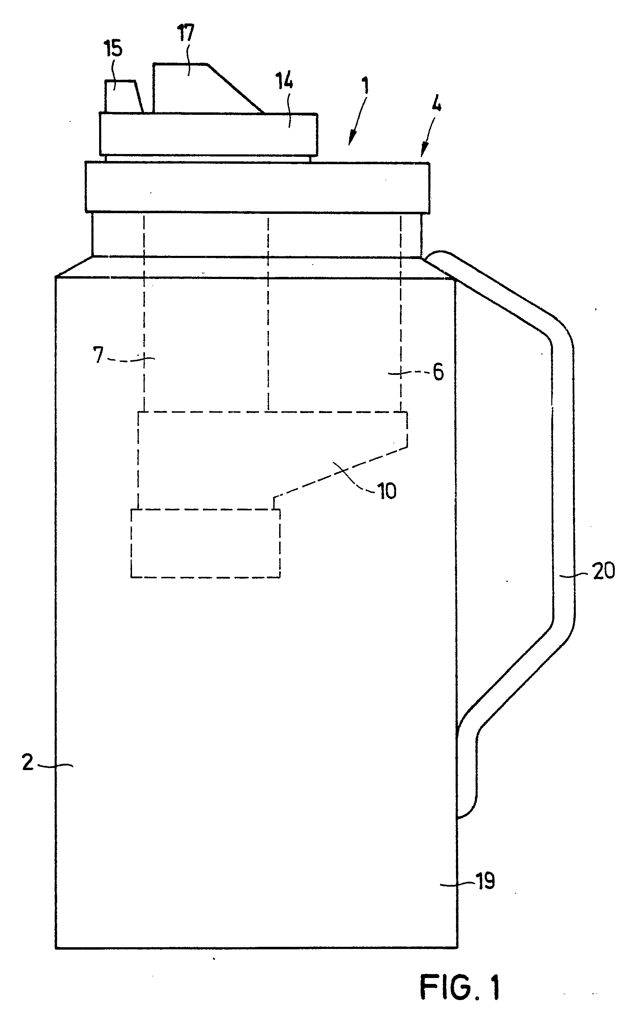

Fig. 1 in schematischer Darstellung ein Ausführungsbeispiel der Erfindung, in

Fig. 2 in einem Schnitt dasselbe Ausführungsbeispiel wie in Fig. 1 in Verschlußstellung, in

Fig. 3 die entsprechende Stellung des Deckels in Verschlußstellung, in

Fig. 4 dasselbe Ausführungsbeispiel wie in Fig. 1 und 2 in einem Schnitt in geöffneter Stellung, in

Fig. 5 den Verschlußdeckel in geöffneter Stellung, in

Fig. 6 in einem Schnitt den Beginn des Ausschüttvorganges und in

Fig. 7 in einem Schnitt den Ausschüttvorgang.

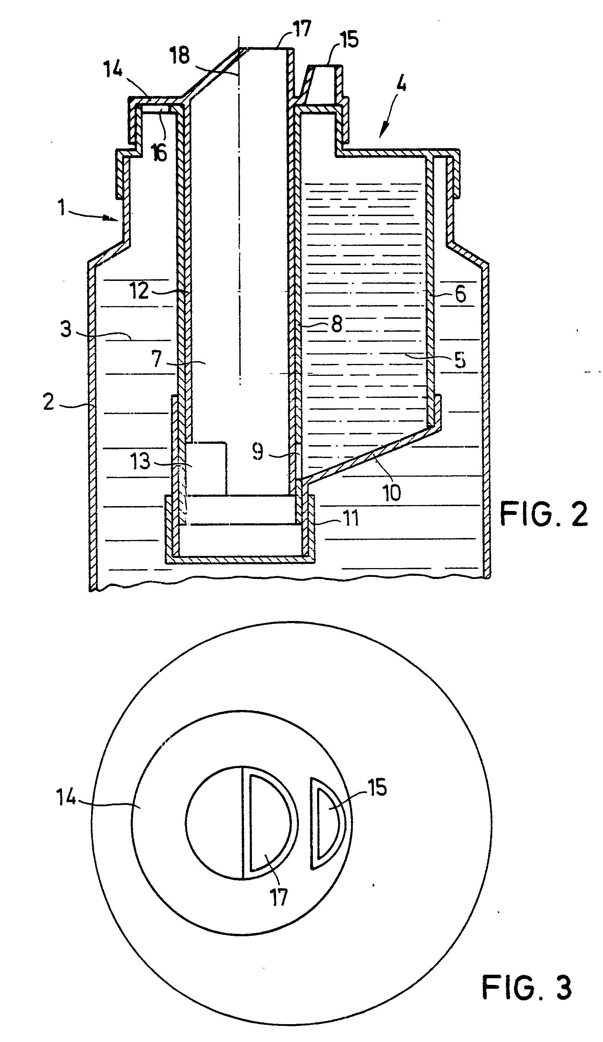

Eine Vorrichtung 1 gemäß eines Ausführungsbeispiels der Erfindung weist einen Aufnahmebehälter 2 für einen flüssigen Stoff 3 sowie einen Aufnahmebehälter 4 für einen schüttfähigen pulverförmigen Stoff 5 auf (Fig. 2). Der Aufnahmebehälter 4 besteht aus einer als Reservoir für den schüttfähigen Stoff 5 dienenden Kammer 6 und einer als Ausschüttkanal dienenden Kammer 7, welche über eine gemeinsame Trennfläche 8 durch eine verschließbare Öffnung 9 miteinander verbunden sind. Die Kammer 6 weist eine zur Öffnung 9 hin nach unten abgeschrägte Bodenfläche 10 auf. Unterhalb der Öffnung 9 und der abgeschrägten Bodenfläche 10 befindet sich ein Bereich 11 der Kammer 7. In die zylindrische Kammer 7 ist ein Rohr 12 eingesetzt, das im Bereich der Öffnung 9 als Halbrohr 13 ausgebildet ist. Das Rohr 12 ist in einen Verschlußdeckel 14 für beide Behälter 2 und 4 integriert. Der Verschlußdeckel 14 weist eine Ausschüttöffnung 15 für eine Öffnung 16 des Behälters 2 sowie eine Ausschüttöffnung 17 für das Rohr 12 auf. Der Deckel 14 ist um die Achse 18 des Rohres 12 drehbar. An einer Seitenfläche 19 des Behälters 2 befindet sich ein Handhabungsgriff 20.

Die Wirkungsweise der Erfindung ist die folgende:

Die Vorrichtung 1 dient vor dem Gebrauch zunächst zer getrennten Lagerung des flüssigen Stoffes 3 im Aufnahmebehälter 2 und des schüttförmigen Stoffes 5 in der Kammer 6 des Aufnahmebehälters 4. Diese Lagerposition ist aus den Fig. 2 und 3 ersichtlich. Der Deckel 14 befindet sich in Verschlußstellung. In dieser Stellung ist die Öffnung 16 des Behälters 2 durch den Deckel 14 und die Öffnung 9 der Trennfläche 8 zwischen den beiden Kammern 6 und 7 durch den halbrohrförmigen Bereich 13 des Rohres 12 verschlossen. Die Ausschüttöffnungen 15 und 17 sind in dieser Position ohne Funktion.

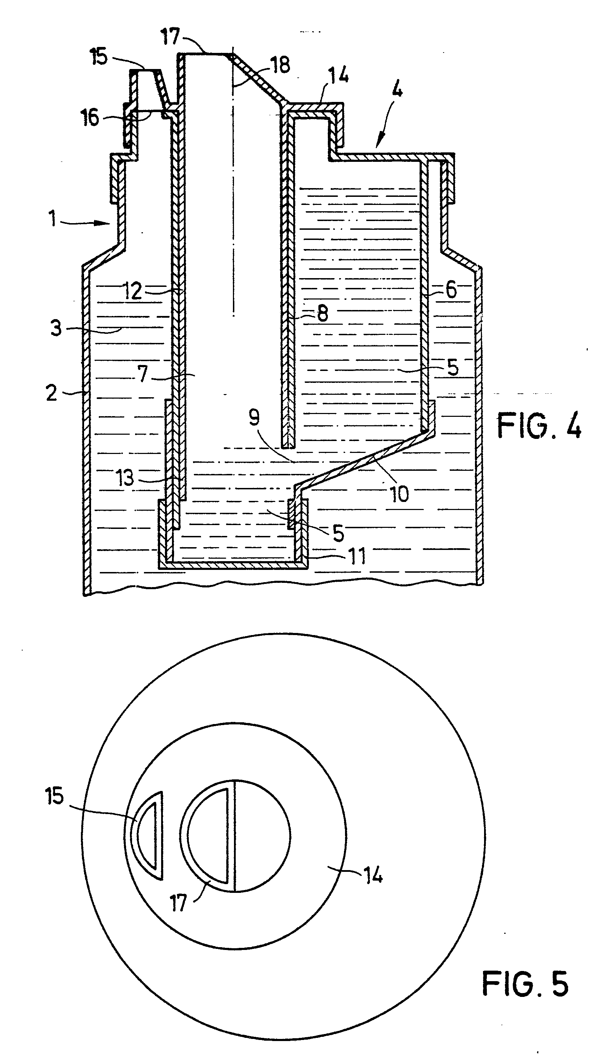

Soll nun die Vorrichtung 1 in Gebrauch genommen werden, so wird der Verschlußdeckel um 180° gedreht. Dadurch wird die Öffnung 16 durch die Ausschüttöffnung 15 freigegeben. Gleichzeitig befindet sich der halbrohrförmige Bereich 13 des Rohres 12 auf der der Öffnung 9 gegenüberliegenden Seite. Dadurch ist die Öffnung 9 der Trennfläche 8 freigege ben (Fig. 4 und 5).

Die Ausschüttöffnungen 15 und 17 sind gleich gerichtet. Der schüttfähige Stoff 5 rieselt über die schräge Bodenfläche 10 durch die Öffnung 9 in die Kammer 7. Dabei bestimmt die Neigung der Bodenfläche 10 und die Größe der Öffnung 9 die Menge an schüttfähigem Stoff 5.

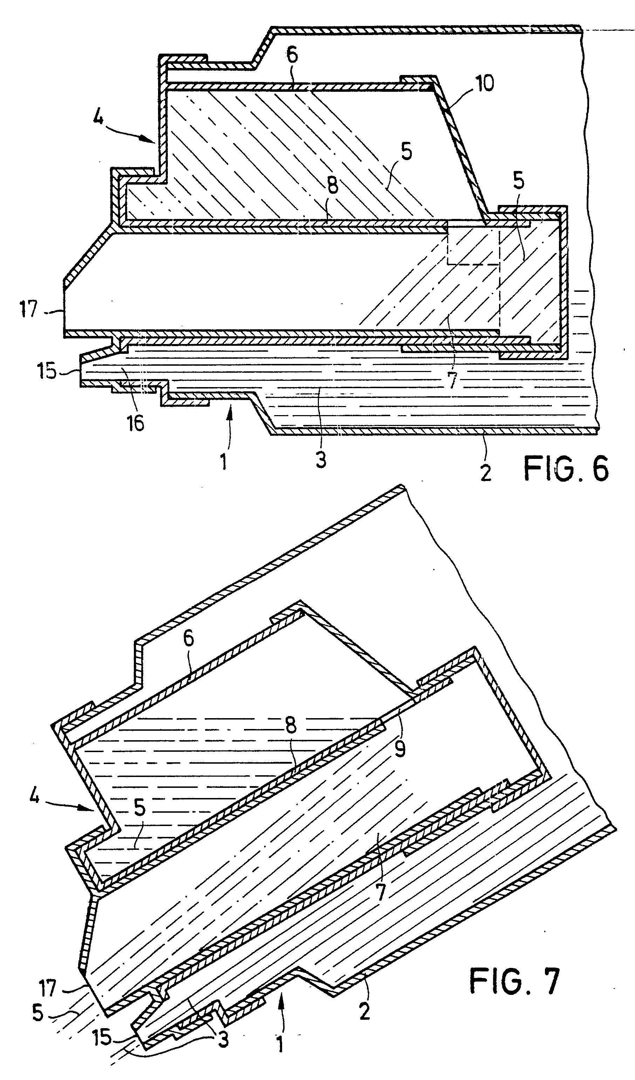

Der eigentliche Ausschüttvorgang ist in den Fig. 6 und 7 dargestellt. Zunächst wird die Vorrichtung 1 in eine horizontale Lage gebracht. In dieser Stellung beginnt der Ausgießvorgang des flüssigen Stoffes 3 durch die Öffnung 16 und die Ausschüttöffnung 15. Gleichzeitig rieselt der schüttfähige Stoff 5 in der Kammer 7 in den bei senkrechter Position der Vorrichtung 1 oberhalb der Öffnung 9 befindlichen Bereich der Kammer 6, so daß kein weiterer schüttfähiger Stoff durch die Öffnung 9 austreten kann. Wird die Vorrichtung 7 nun weiter geschwenkt (Fig. 7), so rieselt der schüttfähige Stoff 5 durch die Kammer 7 aus der Ausschüttöffnung 17 heraus. Gleichzeitig tritt der flüssige Stoff 2 aus.

Sobald der schüttfähige Stoff 5 aus der Kammer 7 vollständig ausgetreten ist, wird die Vorrichtung 1 in die senkrechte Ausgangsposition zurückbewegt. Anschließend wird der Deckel 14 wiederum um 180° gedreht und in die in Fig. 3 dargestellte Position gebracht. Dadurch ist die Öffnung 16 des Aufnahmebehälters 2 und die Öffnung 9 der Trennfläche 8 zwischen den beiden Kammern 6 und 7 des Aufnahmebehälters 4 wieder verschlossen. Die Vorrichtung 1 befindet sich dann wieder in Lagerstellung.

Der dargestellte Ausschüttvorgang ist beliebig oft bis zur vollständigen Entleerung der Vorrichtung 1 zu wiederholen. Bei jedem Ausschüttvorgang tritt eine genau dosierte Menge an schüttfähigem Stoff 5 zusammen mit einer bestimmten Menge an flüssigem Stoff 3 aus der Vorrichtung 1 aus. Das Verhältnis von schüttfähigem Stoff 5 und flüssigem Stoff 3 ist einerseits durch die Größe der Öffnung 9 und andererseits durch die Neigung der Bodenfläche 10 der Kammer 6 fest einzustellen. Selbstverständlich ist es möglich, den Öffnungsquerschnitt der Öffnung 9 durch zusätzliche Maßnahmen zu verändern.

Die Vorrichtung 1 ist nach der Entleerung zum Nachfüllen geeignet. Dazu wird der Deckel 14 mit dem Rohr 12 abgenommen. Außerdem kann der Aufnahmebehälter 4 vom Aufnahmebehälter 2 demontiert werden.

Die Erfindung ist nicht auf das in der Zeichnung dargestellte Ausführungsbeispiel beschränkt. Weitere Ausgestaltungen der Erfindung sind möglich, ohne den Grundgedanken zu verlassen. So können beispielsweise statt eines Aufnah mebehälters für den flüssigen oder für den schüttfähigen Stoff auch mehrere Behälter vorgesehen sein.

**Ansprüche**

1. Vorrichtung mit wenigstens einem Aufnahmebehälter zur Aufbewahrung und Abgabe eines Stoffes, wobei der Aufnahmebehälter mit einer Dosiereinrichtung ausgerüstet ist,
dadurch gekennzeichnet,
daß der Aufnahmebehälter (4) mit Dosiereinrichtung für einen schüttfähigen Stoff (5) vorgesehen und wenigstens einem weiteren Aufnahmebehälter (2) für einen fließfähigen Stoff (3) zugeordnet ist, wobei der Aufnahmebehälter (4) mit Dosiereinrichtung als Einsatz in den Aufnahmebehälter (2) für den fließfähigen Stoff (3) integriert ist.

2. Vorrichtung nach Anspruch 1,
dadurch gekennzeichnet,
daß der Aufnahmebehälter (4) mit Dosiereinrichtung aus zwei durch eine bereichsweise zu öffnende Trennwand (8) voneinander getrennten Kammern (6,7) besteht.

3. Vorrichtung nach Anspruch 2,
dadurch gekennzeichnet,
daß die eine den schüttfähigen Stoff (5) aufnehmende Kammer (6) eine in Richtung zur Trennwand (8) hin nach unten abgeschrägte Bodenfläche (10) aufweist und/oder die andere als Ausschüttkanal dienende Kammer (7) einen Bereich (11) aufweist, der sich bis unterhalb der Bodenfläche (10) der Kammer (6) für den schüttfähigen Stoff (5) erstreckt.

4. Vorrichtung nach Anspruch 2 oder 3,
dadurch gekennzeichnet,
daß die als Ausschüttkanal dienende Kammer (7) zylindrisch ausgebildet ist, wobei die Öffnung (9) in der Trennwand (8) durch ein in die zylindrische Kammer (7) eingesetztes drehbares Rohr (12) verschließbar ist, das im Bereich der Öffnung (9) als Halbrohr (13) ausgebildet ist.

5. Vorrichtung nach Anspruch 1 oder einem der folgenden,
dadurch gekennzeichnet,
daß das Rohr (12) am oberen Ende in einen Deckel (14) integriert ist, wobei der Deckel (14) mit je einer Ausschüttöffnung (15,17) für den fließfähigen (3) und den schüttfähigen Stoff (5) versehen ist.

6. Vorrichtung nach Anspruch 5,
dadurch gekennzeichnet,
daß der Deckel (14) von einer Schließstellung in eine Öffnungsstellung insbesondere für die Ausschüttöffnungen (15,17) drehbar ist.

FIG. 1

FIG. 2

FIG. 3

FIG. 4

FIG. 5

**FIG. 6**

**FIG. 7**